# FASCICULE DE BREVET EUROPEEN

(11) **EP 1 378 113 B1**
(45) Date de publication et mention de la délivrance du brevet: **11.05.2011**
(21) Numéro de dépôt: 01996970.8
(22) Date de dépôt: 16.11.2001
(51) Int. Cl.: H04N 5/335

(54) **DISPOSITIF PHOTOSENSIBLE ET PROCEDE DE COMMANDE DU DISPOSITIF PHOTOSENSIBLE**
PHOTOEMPFINDLICHE VORRICHTUNG UND VERFAHREN ZUR STEUERUNG DER PHOTOEMPFINDLICHEN VORRICHTUNG
PHOTOSENSITIVE DEVICE AND METHOD FOR CONTROLLING SAME

(30) Priorité: 17.11.2000 FR 0014886
(43) Date de publication de la demande: 07.01.2004
(73) Titulaire: Trixell S.A.S., 38430 Moirans (FR)
(72) Inventeur: DUCOURANT, Thierry, Thales Intellectual Property, F-94117 Arcueil Cedex (FR); BOSSET, Bruno, Thales Intellectual Property, F-94117 Arcueil Cedex (FR); VAN OOST, Aysegul, Thales Intellectual Property, F-94117 Arcueil Cedex (FR)
(74) Mandataire: Collet, Alain
(86) Numéro de dépôt international: PCT/FR2001/003606
(87) Numéro de publication internationale: WO 2002/041621

(56) Documents cités:
- EP-A- 0 519 719
- EP-A- 0 918 434
- FR-A- 2 760 585
- FR-A- 2 770 954

## Description

La présente invention concerne un dispositif photosensible comportant plusieurs matrices de points photosensibles du type notamment réalisés par des techniques de dépôt de matériaux semi-conducteurs. L'invention concerne plus particulièrement (mais non exclusivement) la commande de tels dispositifs utilisés pour la détection d'images radiologiques. Elle concerne aussi un procédé de commande du dispositif photosensible.

Les techniques de dépôts en films minces de matériaux semi-conducteurs tels que le silicium amorphe hydrogéné (aSiH), sur des supports isolants en verre par exemple, permettent de réaliser des matrices de points photosensibles pouvant produire une image à partir d'un rayonnement visible ou proche du visible. Pour utiliser ces matrices à la détection d'images radiologique, il suffit d'interposer entre le rayonnement X et la matrice, un écran scintillateur pour convertir le rayonnement X en rayonnement lumineux dans la bande de longueurs d'onde auxquelles les points photosensibles sont sensibles.

Les points photosensibles qui forment ces matrices comprennent généralement un élément photosensible associé à un élément remplissant une fonction d'interrupteur.

L'élément photosensible est couramment constitué par une diode, montée en série avec l'élément interrupteur. L'élément interrupteur peut être par exemple une diode dite de commutation dont l'état " fermé " ou " passant "correspond à la polarisation qui la met en conduction directe, et dont l'état " ouvert " ou " bloqué " correspond à sa polarisation en inverse. Les deux diodes sont montées avec des sens de conduction opposés, dans une configuration dite "tête-bêche". Une telle disposition est bien connue, notamment par les publications FR-A-2 605 166 et FR-A-2 760 585) dans lesquelles décrits, une matrice de points photosensibles du type à deux diodes en configuration " tête- bêche", un procédé de lecture des points photosensibles, et une manière de réaliser un tel dispositif photosensible.

Un défaut affecte la qualité des images. Les composants semi-conducteurs utilisés dans de tels dispositifs photosensibles ne sont pas tous identiques et le dispositif photosensible possède de manière inhérente des inhomogénéités qui se traduisent par des zones altérées et qui varient dans le temps.

Pour essayer d'obtenir une image utile de qualité optimale, on effectue tout d'abord une correction de l'image utile à partir d'une image dite d'offset connue sous la dénomination française d'image noire généralement prise et stockée en début d'un cycle de fonctionnement. Cette image d'offset est l'image obtenue alors que le dispositif photosensible est exposé à un signal d'intensité nulle et correspond à une sorte d'image de fond. L'image d'offset varie en fonction de l'état électrique des composants des points photosensibles et de la dispersion de leurs caractéristiques électriques. L'image utile est celle lue alors que le dispositif photosensible a été exposé à un signal utile qui correspond à une exposition à un rayonnement X. Elle englobe l'image d'offset. La correction consiste à effectuer une soustraction entre l'image utile et l'image d'offset.

De plus, pour améliorer l'image utile, on effectue ensuite une correction de sensibilité à partir d'une image dite de gain. Cette image est obtenue avec un éclairement uniforme calibré en l'absence de sujet ou d'objet à examiner. L'image de gain est elle-même corrigée au moyen de l'image d'offset. La correction de sensibilité consiste à diviser l'image du sujet ou de l'objet à examiner par l'image de gain. Elle permet bien de corriger les variations de sensibilité spatiales puisqu'avec un éclairement uniforme l'image devrait être uniforme.

Tant que l'élément photosensible n'est pas saturé, lors d'un éclairement, les deux corrections précédemment décrites sont suffisantes pour assurer l'homogénéité de l'image obtenue en sortie du dispositif. Néanmoins, le niveau de sortie de deux éléments photosensibles voisins peut différer lorsque ceux ci sont saturés.

Cet inconvénient est notable en radiologie à cause de l'importante absorption des rayonnements X par un corps humain. Par exemple lorsqu'on effectue une radiologie d'un bassin vu de profil, certaines zones denses peuvent absorber de l'ordre de 999 pour 1000 du rayonnement émis. Pour ce type de radiologie, l'opérateur aura tendance à augmenter la quantité de rayonnement X émis, ce qui aura pour conséquence de saturer des éléments photosensibles soumis à un rayonnement traversant des zones moins denses comme par exemple une zone ne comportant que de la peau. Si le niveau de sortie de deux éléments photosensibles voisins diffère lorsque ceux ci sont saturés, on a alors une discontinuité de l'image obtenue en sortie du dispositif au niveau de ces deux points.

L'invention a pour but de pallier ce problème en proposant des moyens permettant le raboutage correct de l'image.

A cet effet, l'invention a pour objet un dispositif photosensible tel que defini dans la revendication 1, comportant plusieurs matrices voisines comportant chacune une pluralité de points photosensibles comprenant chacun un élément interrupteur raccordé en série avec un élément photodétecteur, le dispositif comportant en outre des moyens de polarisation de chaque élément photodétecteur et des moyens de réglage de l'amplitude de la polarisation permettant de régler l'amplitude de la polarisation des points photosensibles, le réglage de l'amplitude de polarisation étant commun à tous les points d'une matrice et étant distinct d'une matrice à l'autre.

On entend par polarisation des points photosensibles une polarisation réalisée indépendamment d'une phase d'acquisition d'image. Plus précisément, il s'agit d'une polarisation initiale qui précède une phase d'acquisition d'image.

L'invention a également pour objet un procédé de commande d'un dispositif photosensible tel que défini dans la revendication 4.

L'invention a un intérêt particulier lorsqu'on réalise une matrice de points photosensibles ou une barrette de points photosensibles de grande dimension. Par exemple en radiologie, on réalise des détecteurs de 40 cm x 40 cm. En effet, dans ce cas, on utilise plusieurs substrats assemblés bord à bord, connu de la publication EP-A-0918434. Au niveau de l'assemblage, on a constaté des écarts de niveau de sortie plus importants entre deux éléments photosensibles voisins lorsque ceux-ci appartiennent à deux substrats différents que lorsque ceux-ci appartiennent au même substrat. Avantageusement, pour simplifier le dispositif photosensible, on conserve le même réglage d'amplitude de la polarisation pour l'ensemble des points photosensibles réalisés sur le même substrat et, bien entendu, ce réglage sera différent pour deux substrats voisins.

L'invention sera mieux comprise et d'autres avantages apparaîtront à la lecture de la description détaillée de plusieurs modes de réalisation de l'invention donnés à titre d'exemple, modes de réalisation illustrés par le dessin joint dans lequel :
- les figures 1 et 2 représentent des dispositifs photosensibles auxquels peut s'appliquer l'invention ;
- la figure 3 représente sous forme de courbe l'évolution du niveau de sortie de deux points photosensibles en fonction de leur éclairement ;
- la figure 4 représente quatre matrices de points photosensibles assemblées bord à bord.

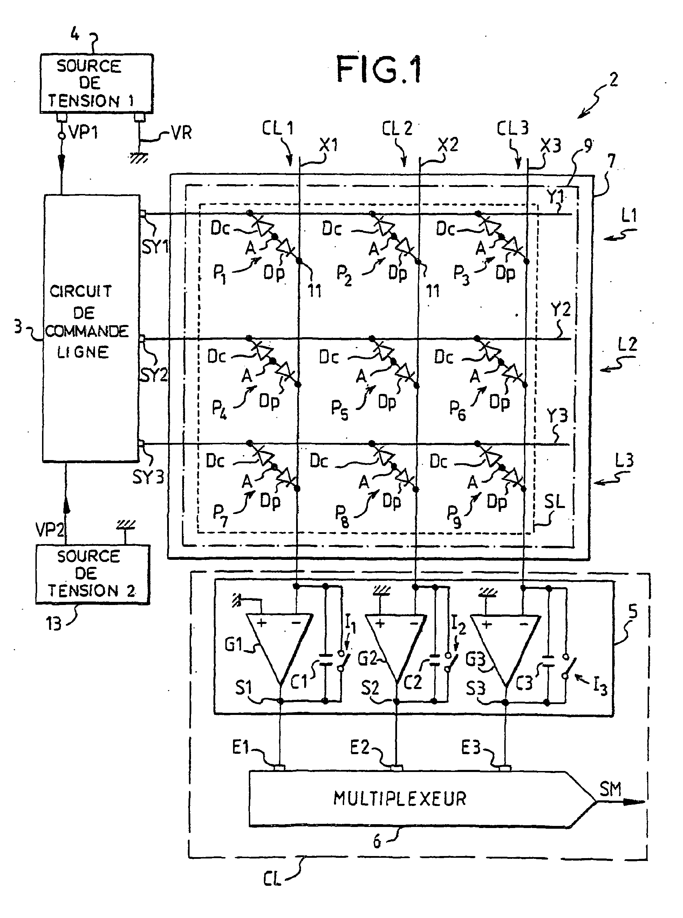

La figure 1 représente un schéma simplifié d'un dispositif photosensible 1, comportant une matrice 2 organisée de façon classique. La matrice 2 comporte des points photosensibles P1 à P9, formés chacun par une diode photosensible Dp et une diode de commutation Dc montées en série suivant une configuration tête-bêche. La matrice comporte des conducteurs en ligne Y1 à Y3 croisés avec des conducteurs en colonne X1 à X3, avec à chaque croisement, un point photosensible connecté entre un conducteur ligne et un conducteur colonne. Les points photosensibles P1 à P9 sont ainsi disposés suivant des lignes L1 à L3 et des colonnes CL1 à CL3.

Dans l'exemple de la figure 1, seulement 3 lignes et 3 colonnes sont représentées qui définissent 9 points photosensibles, mais une telle matrice peut avoir une capacité beaucoup plus grande, pouvant aller jusqu'à plusieurs millions de points. Il est courant par exemple de réaliser de telles matrices ayant des points photosensibles disposés suivant 3000 lignes et 3000 colonnes (dans une surface de l'ordre de 40 cm x 40 cm), ou bien disposés suivant une unique ligne et plusieurs colonnes pour constituer une barrette de détection, ou encore disposés suivant une unique ligne et une unique colonne pour constituer un unique point photosensible.

Le dispositif photosensible comporte un circuit de commande ligne 3, dont des sorties SY1, SY2, SY3 sont reliées respectivement aux conducteurs ligne Y1, Y2, Y3. Le circuit de commande ligne 3 dispose de différents éléments (non représentés), tels que par exemple, circuit d'horloge, circuits de commutation, registre à décalage, qui lui permettent de réaliser un adressage séquentiel des conducteurs lignes Y1 à Y3. Le dispositif photosensible comporte en outre une source de tension 4, délivrant au circuit de commande ligne 3 une tension VP1 servant à définir l'amplitude d'impulsions de polarisation appliquées aux conducteurs lignes et une source de tension 13, délivrant au circuit de commande ligne 3, une tension VP2 servant à définir l'amplitude d'impulsions de lecture appliquées aux conducteurs lignes. Ces deux sources de tension peuvent éventuellement être confondues.

Dans chaque point photosensible P1 à P9, les deux diodes Dp, Dc sont reliées entre elles soit par leur cathode, soit par leur anode comme dans l'exemple représenté. La cathode de la photodiode Dp est reliée à un conducteur colonne X1 à X3, et la cathode de la diode de commutation Dc est reliée à un conducteur ligne Y1 à Y3.

Dans la phase d'acquisition d'image ou de prise d'image, c'est-à-dire d'éclairement de la matrice 2 par un signal lumineux dit " utile ", les deux diodes Dp, Dc de chaque point photosensible P1 à P9 sont polarisées en inverse, et dans cet état elles constituent chacune une capacité. Il est à noter que généralement les deux diodes Dp, Dc sont conçues pour que la capacité présentée par la photodiode Dp soit la plus forte (de l'ordre par exemple de 50 fois). L'élément photodétecteur Dp se décharge sous l'effet d'un éclairement.

Lors de l'exposition à un signal lumineux utile, des charges sont engendrées dans la photodiode Dp par l'éclairement du point photosensible P1 à P9 auquel elle appartient. Ces charges dont la quantité est fonction de l'intensité d'éclairement, s'accumulent en un point " A " sur le noeud (flottant) formé au point de jonction des deux diodes Dp, Dc. La lecture des points photosensibles P1 à P9 s'effectue ligne par ligne, simultanément pour tous les points photosensibles reliés à un même conducteur ligne Y1 à Y3. A cet effet, le circuit de commande ligne 3 applique à chaque conducteur ligne Y1 à Y3 adressé, une impulsion dite de lecture d'une amplitude donnée ; les conducteurs lignes qui ne sont pas adressés sont maintenus à un potentiel de référence Vr ou potentiel de repos, qui est la masse par exemple, et qui peut être le même potentiel que celui qui est appliqué aux conducteurs colonne X1 à X3.

L'éventuelle accumulation de charges au point "A" d'un point photosensible P1 à P9, entraîne en ce point une diminution de la tension, c'est-à-dire une diminution de la tension de polarisation inverse de la photodiode Dp. Avec certains modes de fonctionnement, l'application de l'impulsion de lecture à un conducteur ligne Y1 à Y3 a pour effet de restituer au potentiel du point "A" de tous les points photosensibles reliés à ce conducteur ligne, le niveau de polarisation qu'il possédait avant l'exposition au signal lumineux utile : il en résulte une circulation dans chacun des conducteurs colonne X1 à X3, d'un courant proportionnel aux charges accumulées au point " A " correspondant.

Les conducteurs colonne X1 à X3 sont reliés à un circuit de lecture CL, comprenant dans l'exemple un circuit intégrateur 5, et un circuit multiplexeur 6 formé par exemple d'un registre à décalage à entrées parallèles et sortie série pouvant être du type C.C.D ( de l'anglais "Charge Coupled Device"). Chaque conducteur colonne est relié à une entrée négative" -" d'un amplificateur G1 à G3 monté en intégrateur. Une capacité d'intégration C1 à C3 est montée entre l'entrée négative" - et une sortie S1 à S3 de chaque amplificateur. La seconde entrée " + " de chaque amplificateur G1 à G3 est reliée à un potentiel qui dans l'exemple est le potentiel de référence Vr, potentiel qui par suite est imposé à tous les conducteurs colonne X1 à X3. Chaque amplificateur comporte un élément interrupteur I1 à I3 dit de remise à zéro (constitué par exemple par un transistor du type MOS), monté en parallèle avec chaque capacité d'intégration C1 à C3.

Les sorties S1 à S3 des amplificateurs sont reliées aux entrées E1 à E3 du multiplexeur 6. Cette disposition classique permet de délivrer " en série " et ligne après ligne, (L1 à L3) en sortie SM du multiplexeur 6, des signaux qui correspondent aux charges accumulées aux points " A " de tous les points photosensibles P1 à P9.

Il est à noter qu'il est connu aussi, pour remplir la fonction d'interrupteur qui, dans l'exemple de la figure 1, est tenue par la diode de commutation Dc, d'utiliser un transistor ; ce dernier présente par rapport à la diode une plus grande complexité de connexion, mais il offre des avantages dans la qualité de son état " passant ", avantages qui seront évoqués dans la suite de la description.

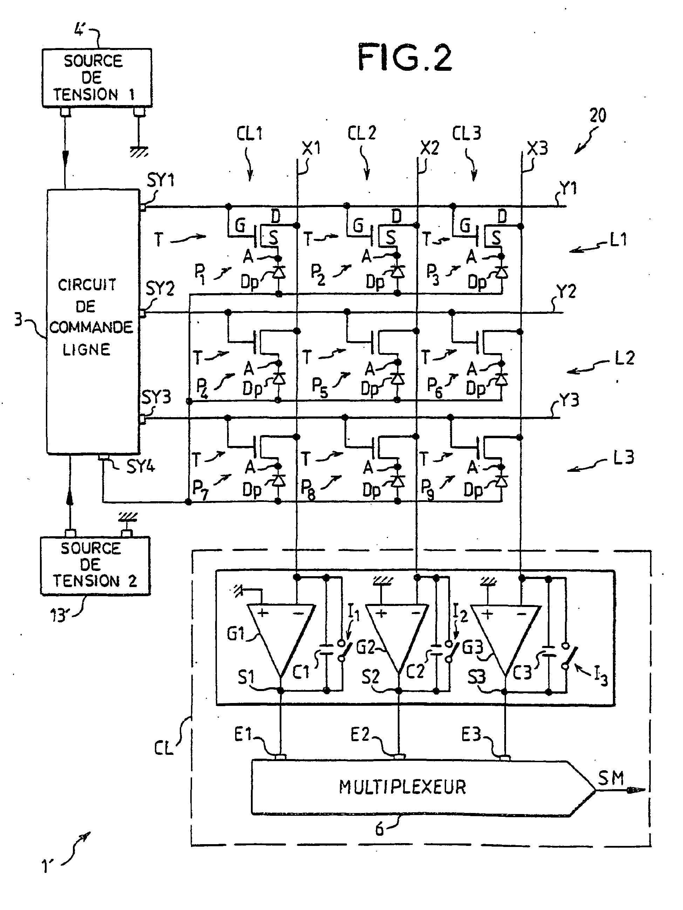

La figure 2 illustre schématiquement un dispositif photosensible 1' qui diffère de celui de la figure 1, principalement en ce qu'il comporte une matrice 20 dans laquelle les diodes de commutation Dc, sont remplacées par des transistors T par exemple réalisés par les techniques de dépôt de films en couches minces. Ces techniques sont connues dans la littérature anglosaxonne sous le nom de Thin Film Transistor (TFT). Ces techniques peuvent également être utilisées pour réaliser la matrice 2 représentée figure 1.

Dans le schéma montré à la figure 2 à titre d'exemple, dans chaque point photosensible P1 à P9, le transistor T est relié par sa source S à la cathode de la photodiode Dp c'est-à-dire au point " A ", sa grille G est reliée au conducteur ligne Y1 à Y3 auquel appartient le point photosensible, et son drain D est relié au conducteur colonne X1 à X3 auquel appartient le point photosensible. Les anodes de toutes les photodiodes Dp sont réunies, et reliées à une sortie SY4 du circuit de commande ligne 3. La sortie SY4 délivre une tension dite de polarisation VP1, négative par rapport au potentiel de référence VR ou masse, de l'ordre par exemple de -5 volts, qui sert à constituer la polarisation en inverse des photodiodes Dp ; le circuit de commande ligne 3 reçoit par exemple cette tension de polarisation d'une source d'alimentation 4'.

Pour mieux comprendre le fonctionnement des dispositifs représentés aux figures 1 et 2, on peut se reporter à la publication FR-2 760 585.

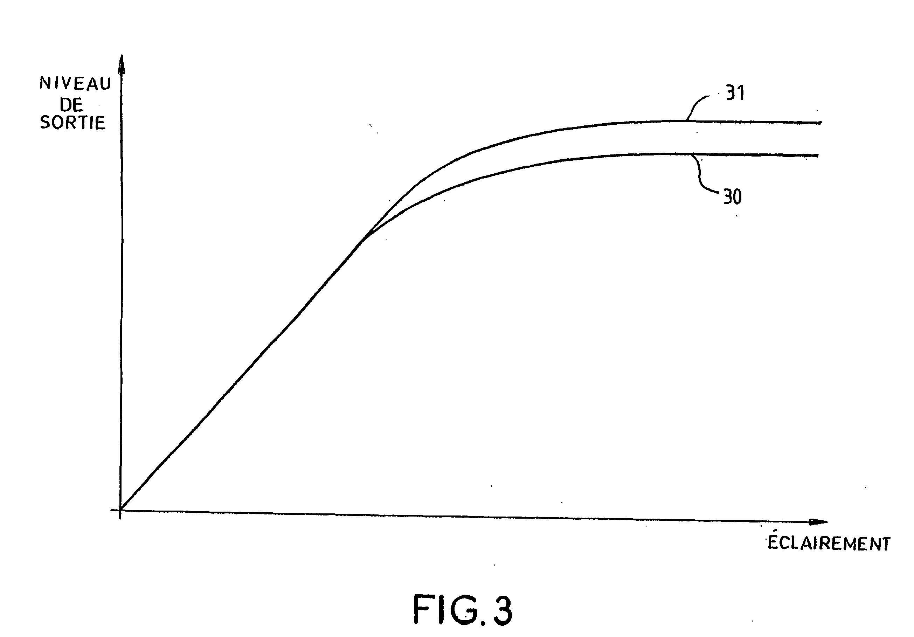

Sur la figure 3, deux courbes 30 et 31 montrent l'évolution du niveau du signal de sortie de deux points photosensibles en fonction de l'éclairement qui leur est appliqué. Ces points photosensibles comportent, par exemple, une photodiode Dp. Les deux courbes 30 et 31 sont confondues pour des niveaux d'éclairement faibles. Cette confusion est obtenue aux moyens de corrections d'offset et de gain réalisées par exemple dans une unité de calcul recevant le signal de la sortie SM du multiplexeur 6. L'unité de calcul n'est pas représentée sur les figures 1 et 2. Les deux courbes ont alors l'allure d'une portion de droite.

Lorsque l'éclairement croît au-delà du domaine linéaire précédemment décrit, la photodiode Dp devient faiblement polarisée. L'efficacité de collection de charges baisse, jusqu'à devenir nulle. A ces niveaux d'éclairement, les courbes 30 et 31 voient donc leur pente diminuer jusqu'à devenir nulle, lorsque l'éclairement croît. Les courbes 30 et 31 atteignent alors chacune une asymptote horizontale correspondant à un niveau de sortie n'évoluant plus. On constate que, même après correction d'offset et de gain, les niveaux de sortie maximum que peuvent atteindre deux photodiodes, peuvent être différents.

L'invention pallie ce problème en proposant un dispositif et un procédé permettant de confondre sensiblement les deux courbes 30 et 31 dans leurs domaines non-linéaires en rapprochant leur valeur asymptotique de niveau de sortie. Ce niveau maximum est également appelé niveau de saturation. Pour atteindre ce résultat, l'invention prévoit le réglage de l'amplitude de publication tel que défini dans les revendications 1 et 4, pour faire coïncider les courbes 30 et 31.

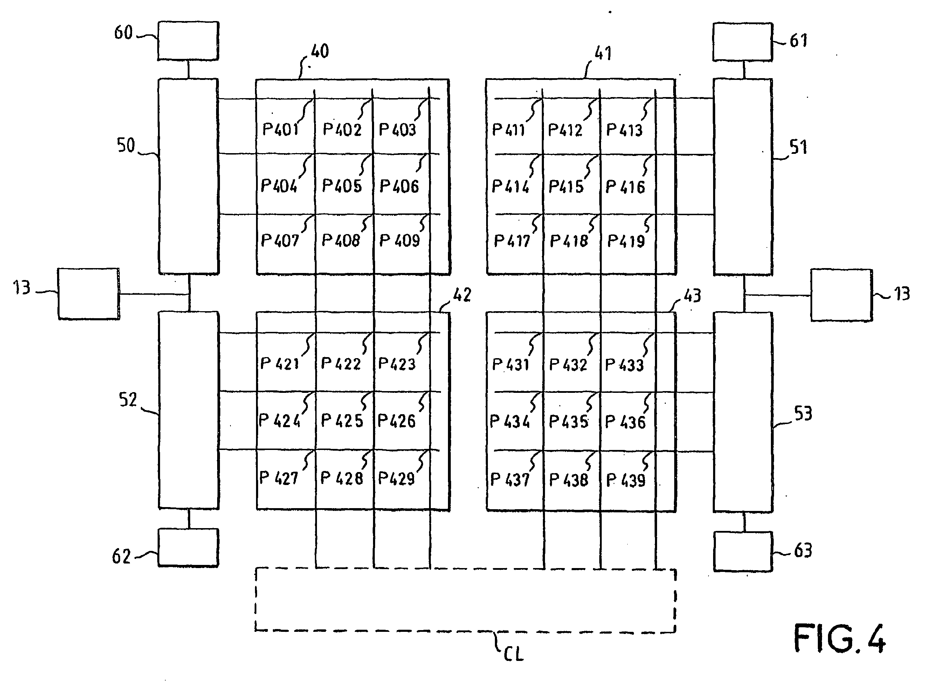

L'invention s'applique donc cas ou le dispositif photosensible est réalisé à partir de plusieurs substrats assemblés bord à bord. Un exemple de réalisation d'un tel assemblage est représenté schématiquement figure 4. Quatre matrices 40, 41, 42 et 43 comportent chacune des points photosensibles P401 à P409 pour la matrice 40, P411 à P419 pour la matrice 41, P421 à P429 pour la matrice 42 et P431 à P439 pour la matrice 43. Chaque point photosensible peut comporter deux diodes Dc et Dp comme représentées à la figure 1 ou une diode Dc et un transistor T comme représenté à la figure 2. Ces constitutions de points photosensibles et leurs nombres ne sont donnés qu'à titre d'exemple. Il en est de même pour le nombre de matrice formant le dispositif. Les matrices 40 à 43 comportent des conducteurs en ligne Y01 à Y03 pour la matrice 40, Y11 à Y13 pour la matrice 41, Y21 à Y23 pour la matrice 42 et Y31 à Y33 pour la matrice 43. Ces conducteurs en lignes sont croisés par des conducteurs en colonnes X021 à X023 pour les matrices 40 et 42 et X131 à X133 pour les matrices 41 et 43.

A chaque croisement, un point photosensible est connecté entre un conducteur en ligne Yn et un conducteur en colonne Xn. Associé à chaque matrice 40 à 43, un circuit de commande ligne, respectivement 50 à 53, est relié aux conducteurs lignes de chaque matrice et remplit les mêmes fonctions que le circuit de commande ligne 3 représenté aux figures 1 et 2.

Conformément à l'invention, les circuits de commande lignes 50 à 53 sont différenciés afin de permettre le réglage distinct pour chaque matrice, de l'amplitude de la polarisation. A cet effet, des sources de tension 60 à 63 sont respectivement reliées chacune à un des circuits de commande lignes 50 à 53. Par ailleurs, la source de tension 13 peut être reliée aux quatre circuits de commande lignes 50 à 53, afin de définir l'amplitude d'impulsions de lecture, cette amplitude étant par exemple la même pour les quatre matrices 50 à 53.

Les conducteurs colonnes X021 à X133 sont, comme dans les dispositifs représentés figures 1 et 2, raccordés au circuit de lecture CL.

Il est possible de mettre en oeuvre l'invention avec un dispositif ne comportant pas de source de tension 13. L'amplitude des impulsions de lecture est alors égale à l'amplitude des impulsions de polarisation et définie pour chaque matrice par les sources de tension 60 à 63. Des avantages à différencier l'amplitude des impulsions de lecture par rapport à l'amplitude de la polarisation sont donnés dans la publication FR-A-2 760 585. La description de cette publication précise notamment qu'une différence d'amplitude entre les amplitudes VP1 et VP2 permet de créer des charges d'entraînements qui circulent lors d'une phase de lecture dans les conducteurs colonnes en plus des charges générées au point photosensible lu, par un éclairement utile (charges utiles). Ces charges d'entraînement sont générées avec un faible bruit et ne perturbent donc que très peu la lecture des charges utiles.

Lorsqu'on met en oeuvre l'invention dans un dispositif où chaque point photosensible comporte deux diodes Dc et Dp comme représentées à la figure 1, il est avantageux d'ajuster l'amplitude de l'impulsion de lecture en fonction de l'amplitude de polarisation. Plus précisément, en conservant le même écart entre les valeurs de ces deux amplitudes, on conserve une même efficacité de lecture pour l'ensemble des points photosensibles.

En revanche, lorsqu'on met en oeuvre l'invention dans un dispositif où chaque point photosensible comporte une diode Dp et un transistor T, l'amplitude de la polarisation VP1 est délivrée à l'ensemble des points photosensibles par la sortie SY4 de chaque circuit de commande 50 à 53 (sortie non représentée sur la figure 4). Par contre, les impulsions de lecture sont délivrées par les conducteurs de ligne reliant les circuits de commande 50 à 53 aux différents points photosensibles. Ceci rend les impulsions de lectures indépendantes de l'amplitude de la polarisation. Il est possible de conserver une même tension pour l'ensemble des impulsions de lecture sans effet sur l'efficacité de lecture même lorsqu'on fait varier de l'amplitude de la polarisation entre deux points photosensibles du dispositif.

Le réglage matrice par matrice de l'amplitude de la polarisation se fait de façon à faire coïncider au mieux les niveaux de sortie de saturation des points photosensibles voisins appartenant à deux matrices voisines. Ce réglage peut se faire de façon empirique par dichotomie. Plus précisément, on mesure pour chaque matrice un niveau de sortie moyen, lorsque les points photosensibles sont saturés, pour les amplitudes minimales et maximales possibles des impulsions de polarisation. On effectue une troisième mesure pour une valeur d'amplitude sensiblement centrée entre les deux premières valeurs d'amplitude. Parmi ces trois mesures, on détermine les deux mesures pour lesquelles le réglage est le meilleur. Ceci permet de diviser sensiblement par deux l'étendue de l'intervalle de recherche de la valeur optimum pour l'amplitude de la polarisation. On renouvelle les opérations permettant de diviser par deux l'intervalle de recherche autant de fois que nécessaire pour arriver au meilleur raboutage.

## Revendications

1. Dispositif photosensible comportant plusieurs matrices (40 à 43) voisines comportant chacune une pluralité de points photosensibles (P401 à P439), chaque point comprenant un élément interrupteur (Dc ; T) raccordé en série avec un élément photodétecteur (Dp), le dispositif comportant en outre des moyens de polarisation (3,4 ; 50 à 53 ; 60 à 63) de chaque élément photodétecteur (Dp) et des moyens de réglage de l'amplitude de la polarisation permettant de régler l'amplitude de la polarisation des points photosensibles (P1 à P9 ; P401 à P409) , réglage de l'amplitude de polarisation étant commun à tous les points d'une matrice et étant distinct d'une matrice à l'autre.

2. Dispositif selon la revendication 1, **caractérisé en ce que** l'élément photodétecteur (Dp) présente une capacité se déchargeant sous l'effet d'un éclairement.

3. Dispositif selon l'une des revendications précédentes, **caractérisé en ce qu'**il comporte des moyens (13) permettant de générer une impulsion de lecture dont l'amplitude (VP2) est commune à tous les points photosensibles.

4. Procédé de commande d'un dispositif photosensible comportant plusieurs matrices (40 à 43) voisines comportant chacune une pluralité de points photosensibles (P401 à P439), chaque point comprenant un élément interrupteur (Dc ; T) raccordé en série avec un élément photodétecteur (Dp), le procéde consistant en phase de calibration à régler l'amplitude de la polarisation de chacun des éléments photodétecteurs (Dp) le réglage de l'amplitude de la polarisation étant commun à tous les points d'une matrice et étant distinct d'une matrice à l'autre, de façon à faire coïncider au mieux les niveaux de saturation de sortie des points photosensibles des différentes matrices.

5. Procédé selon la revendication 4, **caractérisé en ce que** le réglage se fait par dichotomie.

## Claims

1. A photosensitive device comprising several adjacent matrices (40 to 43) each comprising a plurality of photosensitive points (P401 to P439), each point comprising an interrupting element (Dc; T) connected in series with a photo detecting element (Dp), the device further comprising means for polarising (3, 4; 50 to 53; 60 to 63) each photo detecting element (Dp) and means for adjusting the amplitude of the polarisation permitting adjustment of the amplitude of the polarisation of the photosensitive points (P1 to P9; P401 to P409), the adjustment of the polarisation amplitude being common to all of the points of a matrix and being distinct from one matrix to the next.

2. The device according to claim 1, **characterised in that** the photo detecting element (Dp) has a capacitor which discharges under the effect of an illumination.

3. The device according to any one of the preceding claims, **characterised in that** it comprises means (13) for generating a reading pulse, the amplitude (VP2) of which is common to all of the photosensitive points.

4. A process for controlling a photosensitive device comprising several adjacent matrices (40 to 43) each comprising a plurality of photosensitive points (P401 to P439), each point comprising an interrupting element (Dc; T) connected in series with a photo detecting element (Dp), the process consisting during a calibration phase in adjusting the amplitude of the polarisation of each of the photo detecting elements (Dp), the adjustment of the polarisation amplitude being common to all of the points of a matrix and being distinct from one matrix to the next, so as to cause the output saturation levels of the photosensitive points of the different matrices to optimally coincide.

5. The process according to claim 4, **characterised in that** the adjustment is undertaken by dichotomy.

## Patentansprüche

1. Fotoempfindliche Vorrichtung, die mehrere benachbarte Matrizen (40 bis 43) umfasst, die jeweils mehrere fotoempfindliche Punkte (P401 bis P439) umfassen, wobei jeder Punkt ein Unterbrechungselement (Dc; T) umfasst, das in Serie mit einem Fotodetektorelement (Dp) geschaltet ist, wobei die Vorrichtung ferner Folgendes umfasst: Mittel (3, 4; 50 bis 53; 60 bis 63) zum Polarisieren jedes Fotodetektionselements (Dp) und Mittel zum Justieren der Amplitude der Polarisation, so dass die Amplitude der Polarisation der fotoempfindlichen Punkte (P1 bis P9; P401 bis P409) justiert werden kann, wobei die Justage der Polarisationsamplitude allen Punkten einer Matrix gemeinsam und von einer Matrix zur nächsten unterschiedlich ist.

2. Vorrichtung nach Anspruch 1, **dadurch gekennzeichnet, dass** das Fotodetektorelement (Dp) einen Kondensator hat, der sich unter dem Effekt einer Beleuchtung entlädt.

3. Vorrichtung nach einem der vorherigen Ansprüche, **dadurch gekennzeichnet, dass** sie Mittel (13) zum Erzeugen eines Leseimpulses umfasst, dessen Amplitude (VP2) allen fotoempfindlichen Punkten gemeinsam ist.

4. Verfahren zum Steuern einer fotoempfindlichen Vorrichtung, die mehrere benachbarte Matrizen (40 bis 43) umfasst, die jeweils mehrere fotoempfindliche Punkte (P401 bis P439) umfassen, wobei jeder Punkt ein Unterbrechungselement (Dc; T) umfasst, das in Serie mit einem Fotodetektorelement (Dp) geschaltet sind, wobei das Verfahren während einer Kalibrationsphase in dem Justieren der Amplitude der Polarisation jedes der Fotodetektorelemente (Dp) besteht, wobei die Justage der Amplitude der Polarisation allen Punkten einer Matrix gemeinsam und von einer Matrix zur nächsten unterschiedlich ist, um zu bewirken, dass die Ausgangssättigungsniveaus der fotoempfindlichen Punkte der verschiedenen Matrizen optimal in Einklang gebracht werden.

5. Verfahren nach Anspruch 4, **dadurch gekennzeichnet, dass** die Justage durch Dichotomie erfolgt.
